# EUROPÄISCHE PATENTSCHRIFT

(11) **EP 4 191 812 B1**
(45) Veröffentlichungstag und Bekanntmachung des Hinweises auf die Patenterteilung: **28.01.2026**
(21) Anmeldenummer: 22215308.2
(22) Anmeldetag: 17.08.2010
(51) Int. Cl.: B60L 53/80, B60L 55/00

(54) **ELEKTRISCHE LADEVORRICHTUNG**
ELECTRICAL CHARGING DEVICE
DISPOSITIF DE CHARGE ÉLECTRIQUE

(30) Priorität: 19.08.2009 DE 102009038033
(43) Veröffentlichungstag der Anmeldung: 07.06.2023
(62) Teilanmeldung aus: 10742848.4
(73) Patentinhaber: Wobben Properties GmbH, 26607 Aurich (DE)
(72) Erfinder: Diedrichs, Volker, 18209 Bad Doberan (DE); Beekmann, Alfred, 26639 Wiesmoor (DE)
(74) Vertreter: Eisenführ Speiser

(56) Entgegenhaltungen:
- WO-A2-2005/008808
- JP-A- 2008 154 334
- US-A1- 2005 062 290
- US-A1- 2009 189 456
- MADAWALA U K ET AL: "� Living and mobility� - a novel multipurpose in-house grid interface with plug in hybrid BlueAngle", SUSTAINABLE ENERGY TECHNOLOGIES, 2008. ICSET 2008. IEEE INTERNATIONAL CONFERENCE ON, IEEE, PISCATAWAY, NJ, USA, 24 November 2008 (2008-11-24), pages 531 - 536, XP031406015, ISBN: 978-1-4244-1887-9
- W KRAMER ET AL: "Advanced Power Electronic Interfaces for Distributed Energy Systems Part 1: Systems and Topologies", TECHNICAL REPORT - NREL/TP-581-42672 TRN, March 2008 (2008-03-01), United States, XP055562547, Retrieved from the Internet <URL:https://www.nrel.gov/docs/fy08osti/42672.pdf> [retrieved on 20190227], DOI: 10.2172/926102
- DIRK UWE SAUER: "Elektrische Energiespeicher in Hybrid- und Elektrofahrzeugen", INTERNET CITATION, 29 January 2009 (2009-01-29), pages 1 - 27, XP002663806, Retrieved from the Internet <URL:http://lexikon.kfz.tu-berlin.de/kfz-seminar/downloads/vortrag_tu_berlin_29012009.pdf> [retrieved on 20111117]

## Beschreibung

Die vorliegende Erfindung betrifft eine Elektrotankstelle mit einer Ladevorrichtung zum Laden elektrischer Speicher von Elektrofahrzeugen. Weiterhin betrifft die vorliegende Erfindung die Verwendung einer Einspeiseeinheit einer Windenergieanlage und ein Verfahren zum Steuern einer an ein Wechselspannungsnetz angeschlossenen Ladevorrichtung einer Elektrotankstelle.

Aufgrund der vorliegenden weltweiten Energieknappheit fossiler Brennstoffe und auch des bekanntermaßen schlechten Wirkungsgrades von Ottomotoren und selbst von Dieselmotoren gewinnen Elektrofahrzeuge zunehmend an Bedeutung. Unter einem Elektrofahrzeug ist hierbei insbesondere ein PKW zu verstehen, der mittels eines Elektromotors - oder mehrerer Elektromotoren - angetrieben wird. Dies kann auch sogenannte Hybridfahrzeuge einschließen, die nicht nur mittels eines Elektromotors bewegt werden können, sondern zusätzlich einen anderen Motor, wie einen Verbrennungsmotor, aufweisen.

Solche Elektrofahrzeuge speichern ihre Energie häufig in elektrischen Speichern, insbesondere Batterien. Unter elektrischen Speichern bzw. Batterien sind gemäß der vorliegenden Erfindung und nachfolgenden Beschreibung insbesondere elektrische Speicher zu verstehen, die die elektrische Energie für den elektrischen Fahrmotor bzw. die mehreren elektrischen Fahrmotoren eines Elektrofahrzeugs speichern können. Ein Elektrofahrzeug in diesem Sinne kann insbesondere auch als Elektroauto bezeichnet werden. Die Speicherkapazitäten solcher elektrischer Speicher können beispielsweise bei 30 bis 50kWh liegen, typischerweise bei 35kWh.

Nachfolgend wird ein elektrischer Speicher auch als Akkumulator oder kurz Akku bezeichnet werden.

Zum Laden solcher Akkus können insbesondere zwei generelle Konzepte unterschieden werden. Gemäß einem Konzept werden die Akkus direkt am Auto geladen, wobei der Akku am Auto - oder anderem Elektrofahrzeug - verbleibt. Ein anderes Konzept schlägt vor, einen ganz oder teilweise entladenen Akkumulator gegen einen geladenen zu tauschen. Das betreffende Fahrzeug fährt also zu einem Ort, an dem wenigstens ein baugleicher Akkumulator in geladenem Zustand bereitgestellt wird und tauscht den ganz oder teilweise entladenen Akkumulator gegen diesen bereitgestellten Akkumulator aus. Der ganz oder teilweise zurückbleibende Akkumulator kann dann geladen werden, während das betreffende Elektrofahrzeug bereits weiterfahren kann.

Ein solcher Akkumulatortausch kann vorzugsweise an einem zentralen Ort wie einer sogenannten Elektrotankstelle vorgesehen sein. Unter Elektrotankstelle ist somit ein Ort zu verstehen, an dem ein Elektrofahrzeug elektrische Energie aufnehmen kann. Um eine einigermaßen Verfügbarkeit zu gewährleisten, muss eine solche Elektrotankstelle eine Vielzahl von Akkumulatoren vorrätig haben. Geht man beispielsweise von 50 vorrätigen Akkumulatoren aus, die aufzuladen sind bei einer Ladeleistung von 50 bis 100 kW pro Akkumulator, so muss diese beispielhaft genannte Elektrotankstelle über eine Ladeleistung von 2,5 bis 5 MW verfügen. Eine solche Ladeleistung stellt nicht nur an die Ladevorrichtung als solche hohe Anforderungen, sondern auch an die Anbindung an ein Versorgungsnetz bzw. an einen entsprechenden Zweig des Versorgungsnetzes, der zu besagter Elektrotankstelle, also zu besagter Ladevorrichtung führt.

Dabei ist zu beachten, dass bei einer zu erwartenden Zunahme von Elektrofahrzeugen nicht nur mit einer Elektrotankstelle, sondern mit mehreren, optimalerweise vielen flächendeckend verteilten Elektrotankstellen zu rechnen ist, bzw. dass eine solche Situation für die Elektrofahrzeugbenutzer anzustreben wäre.

Als allgemeiner Stand der Technik sei auf folgende Dokumente hingewiesen: DE 103 31 084 A1, WO 2005/008808 A2, US 2006/0192435 A1, DE 100 08 028 A1 sowie Veröffentlichung von Dirk Uwe Sauer, "Elektrische Energiespeicher in Hybrid- und Elektrofahrzeugen", Seminar für Kraftfahrzeug- und Motorentechnik Berlin, 29.01.2009.

Ferner wird auf MADAWALA U K ET AL: "Living and Mobility" - A Novel Multipurpose inhouse Grid Interface with Plug in Hybrid BlueAngle", SUSTAINABLE ENERGY TECHNOLOGIES, 2008, ICSET 2008, IEEE INTERNATIONAL CONFERENCE ON, IEEE, PISCATAWAY, NJ, USA, 24. November 2008 (2008-11-24), Seiten 531-536, XP031406015, ISBN: 978-1-4244-1887-9, hingewiesen, das ein Energiemanagementsystem vorstellt. Das System integriert ein Plug-in-Hybridfahrzeug (PHEV) in ein häusliches Stromnetz. Das System erlaubt den bidirektionalen Energieaustausch zwischen dem Fahrzeug und dem Hausnetz, also das Laden des Fahrzeugs, sowie die Nutzung der Fahrzeugbatterie als Energiequelle für das Haus. Es dient als Energiespeicher, der in Zeiten hoher Netzbelastung Strom bereitstellen kann oder erneuerbare Energien, wie Solar, effizient nutzt. Das Konzept basiert auf einer intelligenten Grid-Interface-Technologie, die verschiedene Energiequellen wie Netzstrom, Solarenergie und Batteriespeicher flexibel kombiniert.

Der vorliegenden Erfindung liegt somit die Aufgabe zugrunde, eine Lösung für wenigstens eines der oben beschriebenen Probleme bzw. Herausforderungen vorzuschlagen. Insbesondere liegt der Erfindung die Aufgabe zugrunde, eine effiziente Lösung zum Laden einer Vielzahl von Akkumulatoren, unter Berücksichtigung der Besonderheiten eines involvierten elektrischen Versorgungsnetzes zu schaffen.

Erfindungsgemäß wird eine Elektrotankstelle mit einer Ladevorrichtung gemäß Anspruch 1 vorgeschlagen.

Eine solche Ladevorrichtung umfasst eine Einspeiseeinheit zum Einspeisen elektrischer Energie in ein elektrisches Wechselspannungsnetz und eine Akkumulatoreinheit bzw. einen Ladeanschluss zum Anschließen einer Akkumulatoreinheit zum Laden und/oder Entladen eines der elektrischen Speicher.

Die Einspeiseeinheit umfasst einen elektrischen Gleichspannungszwischenkreis zum Zwischenspeichern elektrischer Energie. Der elektrische Gleichspannungszwischenkreis weist eine Zwischenkreisspannung auf, wobei diese Zwischenkreisspannung nicht konstant sein muss.

Weiterhin umfasst die Einspeiseeinheit einen Umrichter - auch Frequenzumrichter oder Wechselrichter genannt - der zum Wandeln eines Gleichstroms bzw. einer Gleichspannung aus dem Gleichspannungszwischenkreis in einen Wechselstrom zum Einspeisen in das elektrische Wechselspannungsnetz vorbereitet ist. Ebenso ist der Umrichter dazu vorbereitet, einen Wechselstrom aus dem Wechselspannungsnetz in einen Gleichstrom und/oder in eine Gleichspannung zum Einspeisen bzw. Aufladen des Gleichspannungszwischenkreises zu wandeln.

Gemäß der vorliegenden Erfindung ist aus Gründen der Effizienz von mehreren, insbesondere einer Vielzahl von Akkumulatoreinheiten auszugehen. Jede Akkumulatoreinheit ist dazu vorgesehen, einen elektrischen Speicher zu laden und/oder zu entladen. Dabei wird nachfolgend unter Laden bzw. Entladen auch ein teilweises Laden oder ein teilweises Entladen verstanden. Schließlich sollten sich die Ladevorrichtungen an den jeweiligen Akkumulator sowie etwaige andere Randbedingungen anpassen.

Die Energie zum Laden jedes angeschlossenen Akkumulators wird aus dem Gleichspannungszwischenkreis bezogen. Dabei ist zu erwähnen, dass der Zwischenkreisspeicher selbst üblicherweise nur eine geringe Energiemenge speichern kann und vielmehr im Sinne eines Puffers fungiert.

Beim Entladen eines Akkumulators wird entsprechend die Energie bzw. der Entladestrom zum Gleichspannungszwischenkreis geführt. Das Entladen eines Akkumulators bzw. einer Vielzahl an der Ladevorrichtung angeschlossener Akkumulatoren ist dazu vorgesehen, elektrische Energie bzw. elektrische Leistung in das Wechselspannungsnetz einzuspeisen. Sofern in den Akkumulatoren entsprechend Energie vorhanden ist, kann diese für unterschiedliche Zwecke in das Wechselspannungsnetz eingespeist werden. Zum einen kann einem entsprechenden Energiebedarf nachgekommen werden. Insbesondere kommt eine Einspeisung zu Spitzenlastzeiten in Betracht. So kann kurzzeitig Energie aus den Akkumulatoren zu Spitzenlastzeiten zur Bedarfsdeckung in das Wechselspannungsnetz eingespeist werden. Am Ende solcher Spitzenlastzeiten können die entsprechenden Akkumulatoren wieder aus dem Wechselspannungsnetz geladen werden.

Die Energie eines Akkumulators eines Elektrofahrzeugs ist im Vergleich zu üblichen in einem elektrischen Wechselspannungsnetz benötigten Energien, insbesondere solchen zum Decken des zusätzlichen Energiebedarfs zu Spitzenlastzeiten gering. Erfindungsgemäß ist es aber möglich und bevorzugt vorgesehen, eine Vielzahl von Akkumulatoren an einer Ladevorrichtung anzuschließen, so dass die Ladevorrichtung zum Einspeisen von Energie in das Wechselspannungsnetz über entsprechend viel Energie bzw. Einspeiseleistung verfügen kann. Berücksichtigt man zudem die Verwendung mehrerer, insbesondere einer Vielzahl, erfindungsgemäßer Ladevorrichtungen, an die jeweils eine Vielzahl Akkumulatoren angeschlossen ist, so kann eine beträchtliche Energiemenge und verfügbare Einspeiseleistung zusammenkommen. Im Ergebnis kann sogar ein für Spitzenlasten vorgesehenes Gaskraftwerk überflüssig gemacht werden, wenn die entsprechenden Speicherkapazitäten der Akkumulatoren zusammenkommen.

Zur technischen Umsetzung wird die erfindungsgemäße Ladevorrichtung vorgeschlagen. Elektrische Energie eines und insbesondere mehrerer Akkumulatoren kann über entsprechende Akkumulatoreinheiten dem Gleichspannungszwischenkreis zugeführt und von dem Umrichter in das Wechselspannungsnetz eingespeist werden.

Vorzugsweise ist die Einspeiseeinheit der Ladevorrichtung dazu vorbereitet, Blindleistung in das elektrische Wechselspannungsnetz einzuspeisen. Somit ist es möglich, dass die Ladevorrichtung zudem eine Stützung des elektrischen Wechselspannungsnetzes durch Einspeisung von Blindleistung erreichen kann. Rein vorsorglich ist an dieser Stelle erwähnt, dass die Einspeisung von Blindleistung durch das Einspeisen elektrischen Stroms mit entsprechender Phasenlage im Vergleich zur Phasenlage der Wechselspannung im Wechselspannungsnetz am Einspeisepunkt erfolgen kann. Die Details sind dem Fachmann geläufig und es wird auf einschlägige Fachliteratur verwiesen, z. B. Mohan, Undeland, Robbins: Power Electronics; John Wiley&Sons; ISBN: 0-471-58408-8. Wie eingangs bereits erläutert wurde, liegt der vorliegenden Erfindung und insbesondere einer Ausführungsform die Erkenntnis zugrunde, dass bei entsprechender Zunahme von Elektrofahrzeugen mit einer Zunahme sogenannter Elektrotankstellen und damit vorzugsweise erfindungsgemäßer Ladevorrichtungen gerechnet werden darf, wobei Elektrotankstellen wie herkömmliche Tankstellen flächendeckend verteilt sind. Die Fähigkeit an der erfindungsgemäßen Ladevorrichtung, das Wechselspannungsnetz zu stützen, ist dann besonders an Orten bzw. Gebieten vorteilhaft, die in großer Entfernung zu einem großen in das Wechselspannungsnetz einspeisenden Energieerzeuger wie einem Kraftwerk liegen. Mit anderen Worten wird durch eine flächendeckende Verteilung erfindungsgemäßer Ladevorrichtungen, wie sie durch Elektrotankstellen möglich ist, auch eine entsprechend flächendeckende Stützung des elektrischen Wechselspannungsnetzes ermöglicht.

Eine bevorzugte Ausführungsform schlägt für eine erfindungsgemäße Ladevorrichtung die Verwendung einer Einspeiseeinheit einer Windenergieanlage vor.

Günstig ist hierbei, dass Einspeiseeinheiten moderner Windenergieanlagen oftmals schon heutzutage dazu in der Lage sind, Blindleistung gezielt in das elektrische Wechselspannungsnetz einzuspeisen. Vielmehr sind solche Einspeiseeinheiten auch ansonsten an eine Vielzahl von Anforderungen der Betreiber elektrischer Wechselspannungsnetze angepasst, sind oftmals FACTS-fähig und zudem erprobt. Auch die Dimensionierung solcher Einspeiseeinheiten passt zu einer Verwendung, beispielsweise als Ladevorrichtung, für eine oben beispielhaft genannte Elektrotankstelle, berücksichtigt man, dass moderne Windenergieanlagen bereits über eine Nennleistung von mehr als 5 MW verfügen.

Zudem weisen Einspeiseeinheiten von Windenergieanlagen häufig eine Struktur auf, wie sie gemäß der erfindungsgemäßen Ladevorrichtung vorgeschlagen wird, nämlich die Verwendung eines Gleichspannungszwischenkreises mit einem Umrichter bzw. Wechselrichter. Es braucht somit lediglich jede Akkumulatoreinheit zum Laden und/oder Entladen eines Akkumulators nur an den Gleichspannungszwischenkreis der Einspeiseeinheit einer Windenergieanlage angepasst und daran angeschlossen zu werden. Es ist dabei nicht erforderlich aber möglich, dass eine Windenergieanlage selbst vorgesehen ist, also alle Komponenten, die erforderlich sind besagten Gleichspannungszwischenkreis mit dem Generator zu verbinden, sowie der Generator, der Rotor einschließlich Rotorblätter selbst. Natürlich kann ein an die Einspeiseeinheit einer Windenergieanlage angepasster Transformator ebenfalls zusammen mit eine erfindungsgemäßen Ladevorrichtung verwendet werden.

Vorzugsweise ist die Einspeiseeinheit dazu vorbereitet, die Zwischenkreisspannung auf einen vorgebbaren Wert zu steuern. Generell existiert je nach Betriebszustand ein optimaler Wert für die Zwischenkreisspannung. Dieser sollte so niedrig wie möglich sein, um involvierte Halbleiterbauelemente zu schützen, um eine möglichst lange Lebensdauer zu erreichen. Gleichzeitig muss dieser Wert aber so hoch wie nötig gewählt werden, dass insbesondere ein Einspeisen in das Wechselspannungsnetz möglich ist.

Vorzugsweise ist die Einspeiseeinheit für einen sogenannten 4-Quadranten-Betrieb ausgelegt. Hierunter wird vorliegend ein Betrieb verstanden, bei dem wahlweise Wirkleistung in das Wechselspannungsnetz eingespeist oder aus dem Wechselspannungsnetz entnommen werden kann. Außerdem kann wahlweise Blindleistung in das Wechselspannungsnetz eingespeist oder aus diesem entnommen werden. Jeweils beide Möglichkeiten für Wirkleistung einerseits und Blindleistung andererseits können kombiniert werden, so dass ein Betrieb in jedem der entsprechenden 4 Quadranten möglich ist. Natürlich kann auch Wirkleistung und/oder Blindleistung jeweils oder zugleich den Wert Null annehmen.

Um einen solchen 4-Quadranten-Betrieb zu gewährleisten, kann beispielsweise eine Einspeiseeinheit vorgesehen sein, die eine bidirektionale Funktionsweise gewährleisten kann, nämlich von dem Gleichspannungszwischenkreis aus Wechselstrom in das Wechselspannungsnetz einzuspeisen und - in die andere Richtung - aus dem elektrischen Wechselspannungsnetz Gleichstrom in den Gleichspannungszwischenkreis einspeisen bzw. dem Gleichspannungszwischenkreis zuführen.

Gemäß einer weiteren Ausführungsform weist die Ladevorrichtung ein Eingabeinterface bzw. eine Eingabeschnittstelle auf zum Eingeben eines Wirkleistungssollwertes zum Vorgeben einer in das Wechselspannungsnetz einzuspeisenden oder daraus zu entnehmenden Wirkleistung, und/oder zum Eingeben eines Blindleistungssollwertes zum Vorgeben einer in das Wechselspannungsnetz einzuspeisenden oder daraus zu entnehmenden Blindleistung. Hierbei ist somit vorgesehen, diesen Wirkleistungssollwert und/oder Blindleistungssollwert von extern vorzugeben. Die Ladevorrichtung setzt dann - soweit möglich - diese Vorgabe bzw. Vorgaben um. Der Wirkleistungssollwert und der Blindleistungssollwert können dabei grundsätzlich unterschiedlich behandelt werden.

Die Vorgabe eines Wirkleistungssollwertes betrifft primär eine qualitative Angabe, nämlich insbesondere, ob Wirkleistung in das Wechselspannungsnetz einzuspeisen ist, oder aus diesem entnommen werden kann. Die Größe der zu entnehmenden Wirkleistung oder einzuspeisenden Wirkleistung kann zwar grundsätzlich auch vorgegeben werden, hängt aber auch wesentlich von der Kapazität der angeschlossenen Akkumulatoren ab. Vorzugsweise wird entsprechend maximale Wirkleistung einspeist oder maximale Wirkleistung entnommen.

Der Blindleistungssollwert umfasst auch die Information, ob Blindleistung eingespeist oder aus dem Wechselspannungsnetz entnommen werden soll, wobei der Blindleistungssollwert aber vorzugsweise qualitative und insbesondere innerhalb vorgegebener Grenzen beliebige Werte annehmen kann. Mit anderen Worten wird der Sollwert hier graduell vorgegeben. Es ist auch zu beachten, dass das Einspeisen oder Entnehmen von Blindleistung von der Kapazität der angeschlossenen Akkumulatoren grundsätzlich unabhängig ist.

Durch besagte externe Vorgabe, sowohl eines Wirkleistungssollwertes als auch eines Blindleistungssollwertes, kann entsprechend auf Bedürfnisse des Netzes reagiert werden. Das Ausgleichen von Spitzenlastzeiten oder das Entnehmen von Wirkleistung bei entsprechendem Leistungsüberangebot bzw. Energieüberangebot einerseits kann grundsätzlich unabhängig und zeitgleich zur Stützung des Wechselspannungsnetzes im Sinne der Übertragungseigenschaften des Wechselspannungsnetzes - bzw. eines entsprechenden Teilabschnittes - andererseits erreicht werden. Durch eine externe Vorgabe dieser beiden Sollwerte, die beispielsweise durch den Netzbetreiber erfolgen kann, ist auch eine Koordination mehrerer mit dem Wechselspannungsnetz gekoppelter Ladevorrichtungen und damit eine gezielte und differenzierte Beeinflussung des Netzzustandes insgesamt möglich. Auch das wird gemäß einer Ausführungsform der Erfindung vorgeschlagen.

Eine weitere Ausführungsform schlägt vor, dass die wenigstens eine Akkumulatoreinheit, insbesondere jede Akkumulatoreinheit, elektrisch mit dem Gleichspannungszwischenkreis verbunden ist und dass optional die Ladevorrichtung und insbesondere die wenigstens eine Akkumulatoreinheit - vorzugsweise alle Akkumulatoreinheiten - unempfindlich hinsichtlich Variationen der Zwischenkreisspannung ausgelegt ist bzw. sind. Somit kann trotz angeschlossener Akkumulatoreinheit die Einspeiseeinheit so betrieben werden, dass eine Variation der Amplitude der Zwischenkreisspannung und damit die Einstellung jeweils eines optimalen Wertes der Zwischenkreisspannung möglich ist.

Grundsätzlich weiß der Fachmann, wie eine Unempfindlichkeit, die fachsprachlich auch als Robustheit bezeichnet wird, erreicht werden kann. Es ist klar, dass die Akkumulatoreinheit an die zu erwartenden Variationsbreite angepasst sein muss. Mit anderen Worten muss neben einer Spannungsfestigkeit die Akkumulatoreinheit so ausgelegt werden, dass sie bei geringster zu erwartender Zwischenkreisspannung noch einen Ladestrom steuern kann und dass sie bei größter zu erwartender Zwischenkreisspannung einen Entladestrom zum Gleichspannungszwischenkreis steuern kann. Die Akkumulatoreinheit sollte hierbei die Ladegesetze - die auch das Entladen betreffen - einhalten können.

Weiterhin sollte die Akkumulatoreinheit hinsichtlich ihrer Dynamik auf die Dynamik der Einspeiseeinheit abgestimmt sein. Dies erfolgt dahingehend, dass die Dynamik der Einspeiseeinheit wesentlich schneller eingestellt wird als die Dynamik der Akkumula-toreinheit. Mit anderen Worten werden Zeitkonstanten der Einspeiseeinheit - wie beispielsweise die Wahl bzw. Abstimmung einer Drossel, einer Zwischenkreiskapazität sowie Ansteuerzeiten und Zeitkonstanten von Filtern der Mess- und Regelstruktur - möglichst klein gewählt werden, wohingegen entsprechende Zeitkonstanten der Akkumulatoreinheit entsprechend groß gewählt werden. Im Ergebnis ist es wünschenswert, dass die Einspeiseeinheit eine dominante Zeitkonstante aufweist, die zumindest um den Faktor 10 kleiner ist als die dominante Zeitkonstante der Akkumulatoreinheit. Eine solche Auslegung ist auch als Hierarchisierung bekannt und vermeidet eine unerwünschte gegenseitige Beeinflussung der Regelungen der Einspeiseeinheit und der Akkumulatoreinheit.

Gemäß der Erfindung wird vorgeschlagen, dass die Ladevorrichtung eine Netzdienstleistungssteuereinheit zum Koordinieren des Steuerns der Einspeiseeinheit und der Akkumulatoreinheiten umfasst. Als Grundlage kann die Netzdienstleistungssteuereinheit hierzu externe Vorgabewerte wie den Wirkleistungssollwert und den Blindleistungssollwert erhalten. Insbesondere die Realisierung des Wirkleistungssollwertes bedarf einer Abstimmung zwischen der Einspeiseeinheit und den Akkumulatoreinheiten, damit insbesondere die in das Netz eingespeiste Wirkleistung durch die Akkumulatoreinheiten und damit durch die Akkumulatoren am Gleichspannungszwischenkreis bereitgestellt werden kann bzw. damit die zum Laden der Akkumulatoren benötigte Wirkleistung aus dem Netz entnommen wird. Insbesondere steht die Netzdienstleistungserfassungseinheit in Verbindung mit jeder Akkumulatoreinheit, insbesondere einer dort jeweils vorgesehenen Steuereinheit, und sie steht in Verbindung mit einer Wechselrichtersteuereinheit zum Steuern des Wechselrichters bzw. Umrichters.

Gemäß einer weiteren Ausgestaltung umfasst die Akkumulatoreinheit bzw. jede Akkumulatoreinheit einen mit dem Gleichspannungszwischenkreis verbundenen Tiefsetzsteller und/oder einen mit dem Gleichspannungszwischenkreis verbundenen Hochsetzsteller. Der Tiefsetzsteller ist dazu vorgesehen, aus dem Gleichspannungszwischenkreis jeweils einen Ladestrom, insbesondere gemäß einem Ladegesetz zum Laden des angeschlossenen Ackumulators zu steuern. Entsprechend ist der Hochsetzsteller dazu vorgesehen, einen Entladestrom zu steuern und dem Gleichspannungszwischenkreis zuzuführen.

Somit kann gemäß einer Ausführungsform eine Ladevorrichtung auf einfache Weise vorgesehen sein, indem eine Einspeiseeinheit einer Windenergieanlage verwendet wird, wobei diese einen Gleichspannungszwischenkreis aufweist und an diesen Gleichspannungszwischenkreis ein Tiefsetzsteller und ein Hochsetzsteller für jede parallel zu ladende Ackumulatoreinheit angeschlossen sind, um einen Ladestrom bzw. Entladestrom zu steuern.

Vorzugsweise weist die wenigstens eine Akkumulatoreinheit - insbesondere jede Akkumulatoreinheit - eine Akkumulatorsteuereinheit auf, die den Lade- bzw. Entladestrom und/oder eine entsprechende Ladespannung erfasst. Diese Ladespannung entspricht im Grunde der Spannung an der angeschlossenen Akkumulatoreinheit. Vorzugsweise wird aus diesen Messwerten der Ladezustand des angeschlossenen Akkumulators ermittelt. Ferner kann die jeweilige Ladeleistung bzw. Entladeleistung des angeschlossenen Akkumulators ermittelt werden.

Gemäß der Erfindung sind mehrere Akkumulatoreinheiten vorgesehen, um jeweils einen Akkumulator - ganz oder teilweise - zu laden und/oder zu entladen. Jede Akkumulatoreinheit ist grundsätzlich dazu vorbereitet, den angeschlossenen Akkumulator individuell zu laden oder zu entladen. Das individuelle Laden bzw. Entladen muss insbesondere den jeweiligen Ladezustand als auch den Typ des angeschlossenen Akkumulators berücksichtigen. Wichtig ist, dass die Akkumulatoreinheiten unabhängig voneinander den angeschlossenen Akkumulator laden oder entladen können. Abhängig von dem jeweils zu ladenden oder zu entladenen Akkumulator kann es angezeigt sein, eine entsprechend angepasste Akkumulatoreinheit zu verwenden. Alle Akkumulatoreinheiten sind aber zum Anschließen an den Gleichspannungszwischenkreis angepasst. Das Einspeisen elektrischer Leistung in das Wechselspannungsnetz bzw. das Entnehmen benötigter Leistung aus dem Wechselspannungsnetz ist dabei von der Art der Akkumulatoreinheit weitgehend unabhängig. Es muss im Grunde nur die Ladekapazität berücksichtigt werden.

Gemäß einer weiteren Ausführungsform wird vorgeschlagen, dass die Einspeiseeinheit zum Anschließen an eine Windenergieanlage vorbereitet ist, um eine elektrische Verbindung zwischen der Windenergieanlage und dem Gleichspannungszwischenkreis herzustellen. Insbesondere bei Verwendung einer Einspeiseeinheit einer Windenergieanlage ist dies ein einfach zu realisierendes Merkmal. Durch diese Maßnahme wird erreicht, dass elektrische Energie, die aus Windenergie mittels der Windenergieanlage gewonnen wurde, zum Laden angeschlossener Akkumulatoren verwendet werden kann. Eine Anpassung der Windenergieanlage braucht ansonsten nicht erforderlich zu sein. Beispielsweise kann auch das Laden der Akkumulatoren an die verfügbare Windenergie angepasst werden. Ebenso kann die von der Windenergieanlage erzeugte elektrische Leistung - im Grunde in bekannter Weise - in das elektrische Wechselspannungsnetz eingespeist werden.

Vorzugsweise weist die Ladevorrichtung ein Schaltmittel zum Wählen eines Betriebs mit oder ohne Windenergieanlage und eines Betriebs mit oder ohne Akkumulatoreinheit - bzw. mehrerer Akkumulatoreinheiten - auf. Somit kann das Schaltmittel zwischen 4 Betriebszuständen wählen, wobei die Realisierung beispielsweise auch durch zwei Schaltmittel vorgenommen werden kann, nämlich ein Betrieb mit oder ohne Windenergieanlage mit einem Schaltmittel auszuwählen und mit oder ohne Akkumulatoreinheit mit einem anderen Schaltmittel auszuwählen. Das Vorsehen eines solchen Schaltmittels hat den Vorteil, dass bei der Herstellung der Ladevorrichtung noch nicht bekannt sein muss und damit nicht berücksichtigt werden muss, in welcher Konfiguration die Ladevorrichtung eingesetzt werden soll. Hierdurch ist eine Verringerung der Fertigungsvariation möglich. Zudem kann auch später entschieden werden, einen weiteren Betriebszustand auszuwählen. Besonders bevorzugt ist hierbei eine Ladevorrichtung, die einen Ladeanschluss zum Anschließen einer Akkumulatoreinheit verwendet. So ist es sogar möglich, eine Ladevorrichtung zunächst nur zum Betrieb mit einer Windenergieanlage zum Einspeisen erzeugter Energie in ein Wechselspannungsnetz vorzusehen. Gegebenenfalls kann beispielsweise später entschieden werden, an oder in der Nähe der Windenergieanlage Akkumulatoreinheiten zum Laden von Akkumulatoren vorzusehen.

Es sei darauf hingewiesen, dass auch ein Betriebszustand, sowohl ohne Windenergieanlage als auch ohne Akkumulatoreinheiten sinnvoll sein kann, weil hierdurch noch eine Netzstützung hinsichtlich Einspeisung oder Entnahme von Blindleistung möglich ist. Vorzugsweise ist die Ladevorrichtung, insbesondere die Einspeiseeinheit FACTS-fähig.

Unter FACTS wird "Flexible Alternating Current Transmission System" verstanden. FACTS wird durch den IEEE definiert als ein System, das auf Leistungselektronik basiert und anderer statischer Ausrüstung, die eine Steuerung einer oder mehrere Wechselstromübertragungssystemparameter steuert, um die Steuerbarkeit zu verbessern und die Fähigkeit der Leistungsübertragung zu erhöhen (siehe "proposes terms and definitions for flexible AC transmission systems (FACTS), IEEE transactions on power delivery, volume 12, issue 4, october 1997, pages 1848 to 1853). Solche FACTS-Eigenschaften sind dem Fachmann grundsätzlich geläufig. Blindleistung gezielt in das Wechselspannungsnetz einzuspeisen oder aus diesem zu entnehmen, ist dabei ein Aspekt der genannten FACTS-Fähigkeit. Eine einfache Möglichkeit, solche FACTS-Fähigkeiten zu realisieren besteht darin, eine Einspeiseeinheit einer Windenergieanlage zu verwenden, die FACTS-Fähigkeiten aufweist.

Erfindungsgemäß wird zudem eine Windenergieanlage zum Wandeln von Windenergie in elektrische Energie vorgeschlagen, die eine erfindungsgemäße Ladevorrichtung umfasst bzw. die Komponenten einer solchen Ladevorrichtung umfasst. Gemäß der Erfindung bedeutet dies, dass eine Windenergieanlage einschließlich Einspeiseeinheit einer Windenergieanlage zusätzlich mit Akkumulatoreinheit ausgestattet ist, wobei ein an die Akkumulatoreinheit angeschlossener Akkumulator mittels Akkumulatoreinheit und Einspeiseeinheit geladen und/oder entladen werden kann.

Erfindungsgemäß wird zudem eine Elektrotankstelle vorgeschlagen, die eine erfindungsgemäße Ladevorrichtung und eine erfindungsgemäße Windenergieanlage umfasst. Zusätzlich umfasst die Elektrotankstelle wenigstens einen an die Ladevorrichtung angeschlossenen elektrischen Speicher. Der elektrische Speicher ist vorzugsweise ein solcher, der dazu vorgesehen ist, im geladenen Zustand gegen einen ganz oder teilweise entladenen Akkumulator eines Elektrofahrzeugs getauscht zu werden. Mit anderen Worten befindet sich der zum Laden angeschlossene Akkumulator nicht in einem Elektrofahrzeug, kann aber in ein solches eingebaut werden.

Vorzugsweise umfasst die Elektrotankstelle eine Vielzahl von Akkumulatoren und ist dazu vorbereitet, eine Vielzahl von Akkumulatoren gleichzeitig zu laden und/oder zu entladen.

Erfindungsgemäß wird zudem vorgeschlagen, eine Einspeiseeinheit einer Windenergieanlage als Einspeiseeinheit einer Ladevorrichtung zu verwenden. Insbesondere wird die Verwendung in einer Ladevorrichtung vorgeschlagen, die eine oder mehrere mit der Einspeiseeinheit zu koppelnde Akkumulatoreinheiten aufweist. Es kann somit eine Einspeiseeinheit verwendet werden, die in allen ihren Merkmalen zunächst zur Verwendung in einer Windenergieanlage vorgesehen ist, erfindungsgemäß aber für eine Ladevorrichtung verwendet wird. Gegebenenfalls kann die Einspeiseeinheit zur Verwendung in einer Ladevorrichtung derart angepasst sein, dass zumindest Anschlüsse zum Anschließen einer Akkumulatoreinheit vorgesehen sind.

Erfindungsgemäß wird zudem ein Verfahren zum Steuern einer an ein Wechselspannungsnetz angeschlossenen Ladevorrichtung einer erfindungsgemäßen Elektrotankstelle zum Laden und/oder Entladen von Akkumulatoren von Elektrofahrzeugen vorgeschlagen. Hierbei wird wenigstens eine Vorgabeinformation von einer Steuereinheit oder dergleichen empfangen, wobei die Vorgabeinformation vorgibt, ob und/oder wieviel Wirkleistung in das Wechselspannungsnetz einzuspeisen oder daraus zu entnehmen ist. Weiterhin kann die Vorgabeinformation zusätzlich oder alternativ vorgeben, ob und/oder in welcher Menge Blindleistung in das Wechselspannungsnetz einzuspeisen oder daraus zu entnehmen ist. Eine solche Vorgabeinformation wird immer wiederkehrend empfangen. Es handelt sich also vorzugsweise nicht um eine einmalige Information, sondern diese Information wird ständig aktualisiert, insbesondere von einer Leitstelle an die Ladevorrichtung übermittelt. Diese Leitstelle kann dabei mehrere Ladevorrichtungen teilweise mit unterschiedlichen Vorgabeinformationen versorgen.

Abhängig von der Vorgabeinformation wird dann die Ladevorrichtung so gesteuert, dass entsprechend Wirkleistung in das Wechselspannungsnetz eingespeist oder daraus entnommen wird und/oder, dass möglichst entsprechend der Vorgabeinformation Blindleistung in das Wechselspannungsnetz eingespeist und/oder daraus entnommen wird. Zusätzlich oder alternativ wird die Ladevorrichtung so gesteuert, dass wenigstens einer der angeschlossenen Akkumulatoren zumindest teilweise ge- oder entladen wird. In Bezug auf die Einspeisung von Wirkleistung in das Wechselspannungsnetz oder die Entnahme von Wirkleistung aus demselben ist eine Abstimmung mit dem Steuern des Ladens und/oder Entladens angeschlossener Akkumulatoren vorteilhaft.

Vorzugsweise sind mehrere Akkumulatoren an die Ladevorrichtung angeschlossen, die individuell, insbesondere jeweils unabhängig voneinander geladen bzw. entladen werden. Diese Unabhängigkeit betrifft im Wesentlichen die jeweilige Einhaltung von Ladegesetzen, die die Art und Weise des Ladens oder Entladens des jeweiligen Akkumulators, abhängig von Typ und Ladezustand vorgeben. Hinsichtlich der Frage, ob aufgeladen oder entladen wird, ist hingegen eine übereinstimmende Steuerung mehrerer oder aller angeschlossener Akkumulatoren zu bevorzugen. Vorzugsweise werden also entweder alle Akkumulatoren aufgeladen, oder es werden alle Akkumulatoren entladen. Es kann aber auch ein Betrieb vorgesehen werden, in dem zeitgleich einige Akkumulatoren aufgeladen und andere entladen werden.

Nachfolgend wird die Erfindung anhand von Ausführungsformen unter Bezugnahme auf die begleitenden Figuren beispielhaft näher erläutert.
- Figur 1: zeigt eine Struktur einer erfindungsgemäßen Ladevorrichtung.
- Figur 2: zeigt eine weitere Struktur einer erfindungsgemäßen Ladevorrichtung.

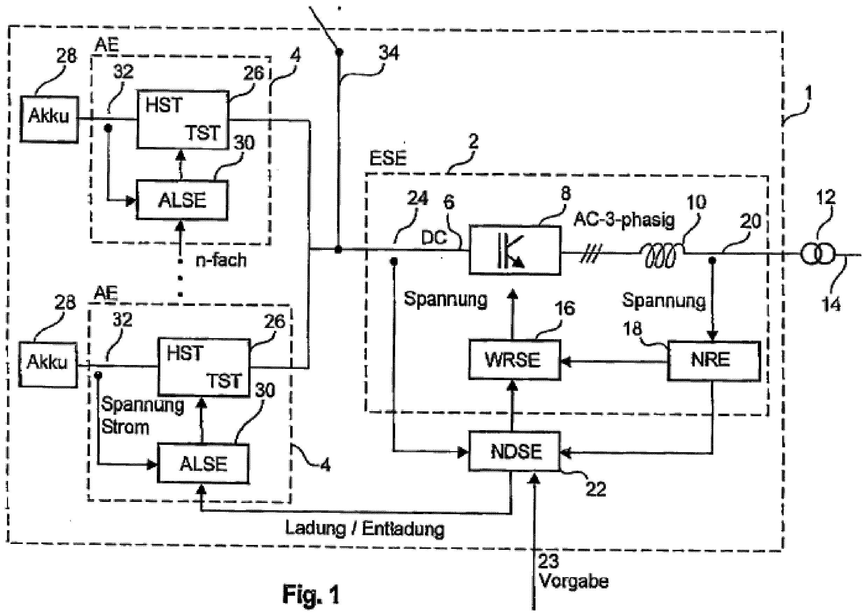

Die Ladevorrichtung 1 umfasst im Wesentlichen eine Einspeiseeinheit 2 und eine Vielzahl von Akkumulatoreinheiten oder kurz Akkueinheiten 4. Die Akkueinheiten 4 sind mit der Einspeiseeinheit 2 gekoppelt, so dass sowohl ein Energiefluss zwischen ihnen als auch ein Informationsaustausch stattfinden kann. Figur 1 zeigt exemplarisch zwei Akkueinheiten 4 und es ist angedeutet, dass viele Akkueinheiten 4 - nämlich n - vorgesehen sind. Theoretisch könnte es ausreichen nur eine Akkueinheit 4 zu verwenden.

Die Ladevorrichtung 1 weist zudem einen Gleichspannungszwischenkreis 6 auf, über den die Einspeiseeinheit 2 mit den Akkueinheiten 4 energetisch gekoppelt ist. Energie aus dem Gleichspannungszwischenkreis 6 kann über den Wechselrichter 8 in eine dreiphasige Wechselspannung gewandelt werden. Es schließt sich eine Drossel 10 an, von der aus der mittels des Wechselrichters 8 erzeugte dreiphasige Wechselstrom über einen Transformator 12 geführt, wobei die erzeugte Wechselspannung in ihrer Amplitude hoch transformiert wird. Der Transformator 12 ist schließlich mit einem Wechselspannungsnetz 14 verbunden.

Ebenso kann Energie aus dem Wechselspannungsnetz 14 entnommen werden und mittels des Wechselrichters 8 dem Gleichspannungszwischenkreis 6 als Gleichstrom zugeführt werden.

Zum Steuern des Wechselrichters 8 zum Einspeisen elektrischer Energie in das Wechselspannungsnetz 14 ist eine Wechselrichtersteuereinheit 16 vorgesehen. Diese steuert den Wechselrichter 8 sowohl im Hinblick auf Frequenz, Phase und Amplitude der erzeugten Spannung. Das konkrete Vorgeben des Pulsmusters kann in dem Wechselrichter 8 als solchem vorgesehen sein oder durch die Wechselrichtersteuereinheit 16 vorgegeben werden. Zum Steuern des Wechselrichtens, benötigt die Wechselrichtersteuereinheit 16 Informationen über die erzeugte Wechselspannung und/oder die Wechselspannung des Wechselspannungsnetzes 14. Hierfür ist eine Netzreferenziereinheit 18 vorgesehen die an einer Wechselspannungsmessstelle 20 die Wechselspannung zwischen der Drossel 10 und dem Transformator 12 misst, auswertet und Informationen darüber, insbesondere über die Frequenz, Phase und Amplitude der Spannung an die Wechselrichtersteuereinheit 16 übermittelt.

Die gemessenen und/oder ausgewerteten Informationen werden von der Netzreferen-ziereinheit 18 zudem an eine Netzdienstleistungssteuereinheit 22 übertragen.

Die Netzdienstleistungssteuereinheit 22 ist im Wesentlichen dazu vorgesehen, die Einspeiseeinheit 2 und die Akkumulatoreinheiten 4 unter anderem abhängig von Vorgabewerten zu koordinieren. Hierzu erhält die Netzdienstleistungssteuereinheit 22 über einen Vorgabepfad 23 externe Vorgabewerte, insbesondere eine Vorgabe hinsichtlich der Einspeisung oder der Entnahme von Wirkleistung und/oder der Einspeisung oder der Entnahme von Blindleistung. Diese Vorgabewerte können von einer externen Stelle über diesen Vorgabepfad 23 übertragen werden.

Die Netzdienstleistungseinheit 22 gibt entsprechende Informationen bzw. Steuerbefehle sowohl an die Akkumulatoreinheiten 4 und dort an Akkumulatorsteuereinheiten 30, als auch an die Einspeiseeinheit 2, insbesondere dort an die Wechselrichtersteuereinheit 16.

Die Netzdienstleistungssteuereinheit 22 empfängt zudem Informationen hinsichtlich Spannung, Strom und/oder Leistung des Gleichspannungszwischenkreises 6 über die Zwischenkreismessstelle 24. Entsprechende Informationen können teilweise an die Wechselrichtersteuereinheit 16 weitergegeben werden. Im Übrigen kommt auch eine direkte Verbindung der Wechselrichtersteuereinheit 16 mit der Zwischenkreismessstelle 24 in Betracht. Weiterhin erhält die Netzdienstleistungssteuereinheit 22 Informationen insbesondere hinsichtlich der Netzspannung über die Netzreferenziereinheit 18. Weiterhin kann die Netzdienstleistungssteuereinheit 22 auch Informationen wie beispielsweise über Ladezustand oder vorhandene Kapazität von jeder Akkumulatoreinheit, insbesondere der Akkumulatorladesteuereinheit 30 erhalten.

Zum Berücksichtigen eines Vorgabewertes hinsichtlich einzuspeisender oder zu entnehmender Blindleistung ist vornehmlich bzw. ausschließlich eine Steuerung der Einspeiseeinheit 2, insbesondere der Wechselrichtersteuereinheit 16 erforderlich. Die Akkueinheiten 4 sind im Grunde nicht betroffen.

Zur Berücksichtigung von Vorgabewerten hinsichtlich einzuspeisender oder zu entnehmender Wirkleistung ist eine Berücksichtigung und Koordination sowohl der Einspeise-einheit 2 als auch der Akkumulatoreinheiten 4 vorteilhaft bzw. notwendig. Hierbei kann auch die verfügbare Ladekapazität jedes an eine Akkumulatoreinheit 4 angeschlossenen Akkumulators 8 und damit im Ergebnis auch die Summe aller verfügbaren Ladekapazitäten berücksichtigt werden. Es ist zu beachten, dass eine Verbindung zwischen der Netzdienstleistungssteuereinheit 22 und jeder Akkumuatorsteuereinheit 30, also der Akkumulatorsteuereinheit 30 jeder Akkumulatoreinheit 4 vorgesehen ist, was gemäß Figur 1 teilweise nur angedeutet ist.

Jede Akkumulatoreinheit 4 ist mit dem Gleichspannungszwischenkreis 6 verbunden, so dass Energie von der Einspeiseeinheit 2 zu jeder Akkumulatoreinheit 4 fließen kann, oder umgekehrt. Hierzu weist jede Akkumulatoreinheit 4 einen Hochsetzsteller und Tiefsetzstellerblock auf, der nachfolgend als Gleichstromsteller 26 bezeichnet wird und mit dem Gleichspannungszwischenkreis 6 verbunden ist. Tatsächlich kommt es bei dem Gleichstromsteller 26 nicht darauf an, dass jeweils ein Hochsetzsteller und ein Tiefsetzsteller im klassischen Sinne enthalten ist, sondern dass der Gleichstromsteller Gleichstrom sowohl aus dem Gleichspannungszwischenkreis 6 in den betreffenden Akku 28 als auch aus dem Akku 28 in den Gleichspannungszwischenkreis 6 steuern kann.

Zur Steuerung des Gleichstromstellers 26 ist eine Akkuladesteuereinheit 30 vorgesehen. Diese Akkuladesteuereinheit 30 empfängt Steuerwerte, insbesondere Steuervorgabewerte von der Netzdienstleistungseinheit 22. Insbesondere kann sie Steuervorgabewerte darüber erhalten, ob der jeweilige Akku 28 zu laden oder zu entladen ist, oder ob dieser weder zu laden noch zu entladen ist.

An dieser Stelle sei erwähnt, dass die Netzdienstleistungssteuereinheit 22 neben den beschriebenen Signalpfaden auch weitere Informationen beispielsweise über den Ladezustand eines oder mehrerer Akkus erhalten kann.

Zum Steuern des Gleichstromstellers 26 erhält die Akkuladesteuereinheit 30 zudem Informationen über den jeweiligen Lade- oder Entladestrom zu bzw. von dem Akku 28 sowie Informationen über die Ladespannung bzw. die Spannung des Akkus 28. Hierzu wird die entsprechende Spannung und der entsprechende Strom an der Akkumessstelle 32 gemessen und in die Akkuladesteuereinheit 30 eingegeben. Über die Akkumessstelle kann Spannung, Strom und Leistung erfasst werden.

Die Figur 1 zeigt exemplarisch zwei Akkus 28. Vorzugsweise werden hier Akkus, insbesondere Lithiumionenakkus von Elektrofahrzeugen verwendet und entsprechend ge- und/oder entladen.

Zum Ankoppeln der Ladevorrichtung der Figur 1 mit einer Windenergieanlage ist eine Ankopplungsstelle 34 vorgesehen. Hierüber kann die Windenergieanlage mit dem Gleichspannungszwischenkreis 6 der Ladevorrichtung 1 verbunden werden. Eine Ausführungsform sieht hierbei vor, dass Windenergie mittels Rotor und Generator in einen elektrischen Wechselstrom gewandelt wird, der eine Gleichrichtung erfährt und dann mittels der Ankopplungsstelle 34 auf den Gleichspannungszwischenkreis 24 gegeben werden kann.

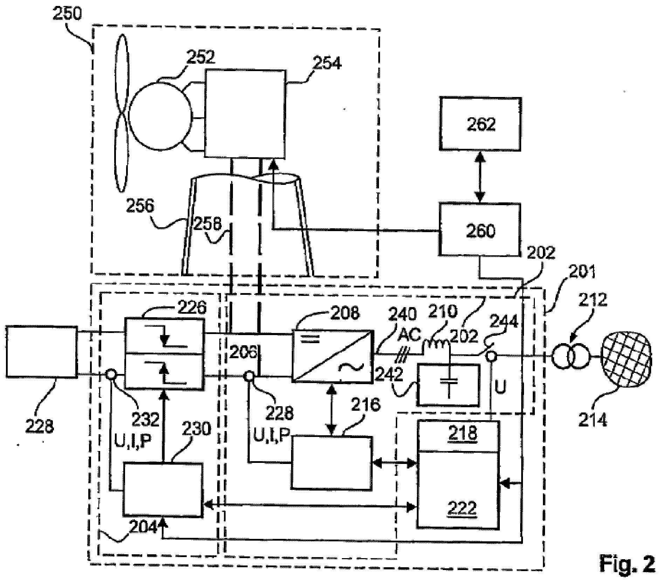

Die Ladevorrichtung der Figur 2 entspricht im Wesentlichen der Ladevorrichtung 1 der Figur 1. Zur besseren Übersichtlichkeit entsprechen die Bezugszeichen der Figur 2 in Ihren letzten beiden Stellen bzw. in ihrer letzten Stelle den Bezugszeichen korrespondierender Elemente der Ladevorrichtung 1 der Figur 1. Insoweit wird auch für die Erläuterung der entsprechenden Elemente auf die Figur 1 verwiesen.

Somit weist die Ladevorrichtung 201 eine Einspeiseeinheit 202 und eine Vielzahl Akkumulatoreinheiten 204 auf, von denen allerdings exemplarisch nur eine dargestellt ist. Jegliche Verbindungen, die zu der exemplarischen Akkumulatoreinheit 204 dargestellt sind, sind auch zu den weiteren, nicht dargestellten, Akkumulatoreinheiten vorgesehen. Dies betrifft auch den elektrischen Speicher 228, der mit der Akkumulatoreinheit 204 verbunden ist. Die Akkumulatoreinheit 204 weist einen Gleichstromsteller 226 auf, der einen Hochsetzsteller und einen Tiefsetzsteller umfasst und der durch eine Akkumulatorsteuereinheit 230 angesteuert wird. Zur Aufnahme von Spannung, Strom und Leistung ist eine Akkumessstelle 232 vorhanden.

Der Gleichstromsteller 226 ist über einen Gleichspannungszwischenkreis 206 mit der Einspeiseeinheit 202 und damit mit dem Wechselrichter 208 gekoppelt. Eine Ansteuerung des Wechselrichters 208 erfolgt über die Wechselrichtersteuereinheit 216, die Spannung, Strom und/oder Leistung an der Zwischenkreismessstelle 224 aufnimmt. Der Wechselrichter 208 gewährleistet einen Leistungsfluss (sowohl Wirkleistung als auch Blindleistung) von dem Gleichspannungszwischenkreis 206 zu einem dreiphasigen Wechselspannungsausgang 240, an den sich eine Drossel 210 und ein Netzfilter 242 anschließt, und umgekehrt. Bei einer Messstelle zur Spannungserfassung, insbesondere Netzspannungserfassung ist zudem ein Schalter 244 vorgesehen, um eine Unterbrechung- zum Wechselspannungsnetz 214 zu ermöglichen. Die Netzspannungserfassung bzw. Netzerfassung erfolgt mittels der Netzerfassung 218, die in der Funktion mit der Netzreferenziereinheit 18 der Ladeeinheit 1 der Figur 1 vergleichbar ist. Die Netzerfassung 218 ist eng gekoppelt mit einer sogenannten FACTS-Steuerung bzw. -Steuereinheit 222, die vergleichbar ist mit der Netzdienstleistungssteuereinheit 22 der Ladevorrichtung 1 der Figur 1. Die FACTS-Steuerungseinheit 222 kann zusammen mit der Netzerfassung 218 als eigenständige Einheit angesehen sein, die sowohl mit der Einspeiseeinheit 202 als auch der Akkumulatoreinheit 204 kommuniziert.

Im Übrigen verwendet auch die Ladevorrichtung 201 der Figur 2 zur Netzanbindung einen Transformator 212 zum Verbinden mit dem Wechselspannungsnetz 214.

In Figur 2 ist zudem eine Kopplung über den Gleichspannungszwischenkreis 206 mit einer Windenergieanlage 250 als Option dargestellt. Die Windenergieanlage 250, von der ein Turm 256 angedeutet ist, weist zudem einen Generator 252 zum Erzeugen eines elektrischen, dreiphasigen Wechselstroms auf, der mittels des Gleichrichters 254 gleichgerichtet wird. Von dem Gleichrichter 254 ist somit eine elektrische Kopplung und Verbindung 258 mit dem Gleichspannungszwischenkreis 206 vorgesehen.

Die Steuerung der Windenergieanlage 250 erfolgt über der Windenergieanlagensteuerung 260. Dieser ist eine Leitebene 262 übergeordnet, die auch Vorgabewerte an die Windenergieanlagensteuerung 260 geben kann. Solche Vorgabewerte können auch vorgeben, ob Wirkleistung in das Wechselspannungsnetz 214 abzugeben oder daraus zu entnehmen ist, und/oder ob und in welchem Umfang Blindleistung in das Wechselspannungsnetz einzuspeisen oder aus diesem zu entnehmen ist. Entsprechende Vorgabewerte können von der Windenergieanlagensteuerung 260 an die FACTS-Steuerung 222 weitergegeben werden. Somit ist mittels der FACTS-Steuerung 222 zudem eine Abstimmung des Entladens und/oder Aufladens angeschlossener Akkumulatoren 228 und das Einspeisen oder Entnehmen von Wirkleistung und/oder Blindleistung in das bzw. aus dem Wechselspannungsnetz möglich.

## Patentansprüche

1. Elektrotankstelle umfassend,
- eine Windenergieanlage (250) zum Wandeln von Windenergie in elektrische Energie umfassend eine Ladevorrichtung (1) zum Laden elektrischer Speicher (28) von Elektrofahrzeugen umfassend
- eine Einspeiseeinheit (2) zum Einspeisen elektrischer Energie in ein elektrisches Wechselspannungsnetz (14) umfassend
- einen elektrischen Gleichspannungszwischenkreis (6) zum Zwischenspeichern elektrischer Energie mit einer Zwischenkreisspannung und
- einen Umrichter (8), der vorbereitet ist zum Wandeln eines Gleichstroms und/oder einer Gleichspannung des Gleichspannungszwischenkreises (6) in einen Wechselstrom, zum Einspeisen in das elektrische Wechselspannungsnetz (14) und zum Wandeln eines Wechselstroms aus dem Wechselspannungsnetz (14) in einen Gleichstrom und/oder in eine Gleichspannung zum Einspeisen in den Gleichspannungszwischenkreis (6), und
- mehrere Akkumulatoreinheiten (4) zum zumindest teilweisen Laden jeweils eines der elektrischen Speicher (28) aus dem Gleichspannungszwischenkreis (6) und zum zumindest teilweisen Entladen jeweils eines der elektrischen Speicher (28) in den Gleichspannungszwischenkreis (6) und
- wenigstens einen an die Ladevorrichtung (1) angeschlossenen elektrischen Speicher (28), wobei der elektrische Speicher (28) dazu vorgesehen ist, im geladenen Zustand gegen einen ganz oder teilweise entladenen elektrischen Speicher (28) eines Elektrofahrzeugs ausgetauscht zu werden und
- eine Netzdienstleistungssteuereinheit (22) zum Koordinieren des Steuerns der Einspeiseeinheit (2) und der Akkumulatoreinheiten (4).

2. Elektrotankstelle (1) nach Anspruch 1, **dadurch gekennzeichnet, dass** die Einspeiseeinheit (2) dazu vorbereitet ist, Blindleistung in das elektrische Wechselspannungsnetz (14) einzuspeisen.

3. Elektrotankstelle (1) nach Anspruch 1 oder 2, **dadurch gekennzeichnet, dass** die Einspeiseeinheit (2) dazu vorbereitet ist, die Zwischenkreisspannung auf einen vorgebbaren Wert zu steuern.

4. Elektrotankstelle (1) nach einem der vorstehenden Ansprüche, **dadurch gekennzeichnet, dass** die Einspeiseeinheit (2) für einen 4-Quadranten-Betrieb ausgelegt ist, nämlich dazu ausgelegt ist, wahlweise Wirkleistung in das Wechselspannungsnetz (14) einzuspeisen, oder daraus zu entnehmen und/oder Blindleistung in das Wechselspannungsnetz (14) einzuspeisen oder daraus zu entnehmen.

5. Elektrotankstelle (1) nach einem der vorstehenden Ansprüche, **gekennzeichnet durch** ein Eingabeinterface zum Eingeben eines Wirkleistungssollwertes zum Vorgeben einer in das Wechselspannungsnetz (14) einzuspeisenden oder daraus zu entnehmenden Wirkleistung, und/oder zum Eingeben eines Blindleistungssollwertes zum Vorgeben einer in das Wechselspannungsnetz einzuspeisenden oder daraus zu entnehmenden Blindleistung.

6. Elektrotankstelle (1) nach einem der vorstehenden Ansprüche, **dadurch gekennzeichnet, dass** die wenigstens eine Akkumulatoreinheit (4) elektrisch mit dem Gleichspannungszwischenkreis (14) verbunden ist und wobei optional die Ladevorrichtung (1) und insbesondere die wenigstens eine Akkumulatoreinheit (4) unempfindlich hinsichtlich Variationen der Zwischenkreisspannung ausgelegt ist.

7. Elektrotankstelle (1) nach einem der vorstehenden Ansprüche, **dadurch gekennzeichnet, dass** die wenigstens eine Akkumulatoreinheit (4),
- einen mit dem Gleichspannungszwischenkreis (6) verbundenen Tiefsetzsteller (26) aufweist zum Steuern eines Ladestroms zum wenigstens teilweisen Laden des elektrischen Speichers (28) und/oder
- einen mit dem Gleichspannungszwischenkreis (6) verbundenen Hochsetzsteller (26) aufweist zum Steuern eines Entladestroms zum wenigstens teilweisen Entladen des elektrischen Speichers (28).

8. Elektrotankstelle (1) nach einem der vorstehenden Ansprüche, **dadurch gekennzeichnet, dass** die wenigstens eine Akkumulatoreinheit (4) eine Akkumulatorsteuereinheit (30) aufweist zum Steuern eines bzw. des Hochsetzstellers und/oder zum Steuern eines bzw. des Tiefsetzstellers und/oder zum Erfassen:
- eines Lade- bzw. Entladestroms,
- einer elektrischen Ladespannung, insbesondere eines an die Akkumulatoreinheit angeschlossenen elektrischen Speichers,
- einer Lade- bzw. Entladeleistung und/oder
- eines Ladezustandes eines an die Akkumulatoreinheit angeschlossenen elektrischen Speichers.

9. Elektrotankstelle (1) nach einem der vorstehenden Ansprüche, **dadurch gekennzeichnet, dass** die Einspeiseeinheit (2) zum Anschließen an eine Windenergieanlage (250) vorbereitet ist, um eine elektrische Verbindung zwischen der Windenergieanlage (250) und dem Gleichspannungszwischenkreis (6) herzustellen.

10. Elektrotankstelle (1) nach einem der vorstehenden Ansprüche, **gekennzeichnet durch** ein Schaltmittel zum Wählen eines Betriebs
- mit Windenergieanlage und mit Akkumulatoreinheit (4),
- ohne Windenergieanlage und mit Akkumulatoreinheit (4),
- mit Windenergieanlage und ohne Akkumulatoreinheit (4) und/oder
- ohne Windenergieanlage und ohne Akkumulatoreinheit (4).

11. Verwendung einer Einspeiseeinheit (2) einer Windenergieanlage (250) als Einspeiseeinheit (2) einer Ladevorrichtung (1) zum Laden elektrischer Speicher (28) von Elektrofahrzeugen,
die Einspeiseeinheit (2) umfasst
- einen elektrischen Gleichspannungszwischenkreis (6) zum Zwischenspeichern elektrischer Energie mit einer Zwischenkreisspannung und
- einen Umrichter (8), der vorbereitet ist zum Wandeln eines Gleichstroms und/oder einer Gleichspannung des Gleichspannungszwischenkreises (6) in einen Wechselstrom zum Einspeisen in das elektrische Wechselspannungsnetz (14) und zum Wandeln eines Wechselstroms aus dem Wechselspannungsnetz (14) in einen Gleichstrom und/oder in eine Gleichspannung zum Einspeisen in den Gleichspannungszwischenkreis (6), und zum zumindest teilweisen Laden eines der elektrischen Speicher (28) aus dem Gleichspannungszwischenkreis (6) und/oder zum zumindest teilweisen Entladen eines der elektrischen Speicher (28) in den Gleichspannungszwischenkreis (6) wird eine bzw. jeweils eine mit dem Gleichspannungszwischenkreis (6) gekoppelte Akkumulatoreinheit (4) verwendet und
- mehrere Akkumulatoreinheiten (4) zum zumindest teilweisen Laden jeweils eines der elektrischen Speicher (28) aus dem Gleichspannungszwischenkreis (6) und zum zumindest teilweisen Entladen jeweils eines der elektrischen Speicher (28) in den Gleichspannungszwischenkreis (6) und
- wenigstens einen an die Ladevorrichtung (1) angeschlossenen elektrischen Speicher (28), wobei der elektrische Speicher (28) dazu vorgesehen ist, im geladenen Zustand gegen einen ganz oder teilweise entladenen elektrischen Speicher (28) eines Elektrofahrzeugs ausgetauscht zu werden und
- eine Netzdienstleistungssteuereinheit (22) zum Koordinieren des Steuerns der Einspeiseeinheit (2) und der wenigstens einen Akkumulatoreinheit (4).

12. Verfahren zum Steuern einer an ein Wechselspannungsnetz (14) angeschlossenen Ladevorrichtung (1) einer Elektrotankstelle nach einem der Ansprüche 1 - 10, wobei die Ladevorrichtung (1) mit einer Windenergieanlage (250) zum Produzieren elektrischer Energie aus Windenergie gekoppelt ist und abhängig von verfügbarer Windenergie und/oder abhängig von Vorgabeinformation wenigstens einer der elektrischen Speicher (28) mit aus Windenergie produzierter elektrischer Energie geladen wird.

13. Verfahren nach Anspruch 12, umfassend die Schritte:
- Empfangen der Vorgabeinformation zum Vorgeben, Wirkleistung in das Wechselspannungsnetz (14) einzuspeisen, oder daraus zu entnehmen und/oder Blindleistung in das Wechselspannungsnetz (14) einzuspeisen oder daraus zu entnehmen, und
- Steuern der Ladevorrichtung (1) um abhängig der Vorgabeinformation Wirkleistung in das Wechselspannungsnetz (14) einzuspeisen, oder daraus zu entnehmen und/oder Blindleistung in das Wechselspannungsnetz (14) einzuspeisen oder daraus zu entnehmen, und/oder
- Steuern der Ladevorrichtung (1) so, dass abhängig der Vorgabeinformation wenigstens einer der elektrischen Speicher (28) zumindest teilweise ge- oder entladen wird und/oder wobei mehrere der elektrischen Speicher (28) an die Ladevorrichtung (1) angeschlossen sind, insbesondere jeweils ein elektrischer Speicher (28) an eine Akkumulatoreinheit (4) angeschlossen ist, wobei jeder der elektrischen Speicher (28) individuell ge- bzw. entladen wird.

## Claims

1. Electric filling station including
- a wind power installation (250) for converting wind power into electric energy including a charging apparatus (1) for charging electric storage devices (28) of electric vehicles comprising
- a feed-in unit (2) for feeding electric energy into an electric ac voltage network (14) comprising
- an electric dc voltage intermediate circuit (6) for the intermediate storage of electric energy with an intermediate circuit voltage, and
- an inverter (8) which is provided for converting a direct current and/or a dc voltage of the dc voltage intermediate circuit (6) into an alternating current, for feeding it into the electric ac voltage network (14) and for converting an alternating current from the ac voltage network (14) into a direct current and/or into a dc voltage for feeding it into the dc voltage intermediate circuit (6), and
- a plurality of accumulator units (4) for at least partial charging a respective electric storage devices (28) from the dc voltage intermediate circuit (6) or for at least partial discharging a respective electric storage devices (28) into the dc voltage intermediate circuit (6),
- at least one electric storage device (28) connected to the charging apparatus (1), wherein the electric storage device (28) is provided to be exchanged in the charged condition for an entirely or partially discharged electric storage device (28) of an electric vehicle and
- a network service power control unit (22) for co-ordinating the control of the feed-in unit (2) and the accumulator units (4).

2. Electric filling station (1) according to claim 1, **characterized in that** the feed-in unit (2) is designed to feed reactive power into the ac voltage network (14).

3. Electric filling station (1) according to claim 1 or claim 2, **characterized in that** the feed-in unit (2) is provided for controlling the intermediate circuit voltage to a predeterminable value.

4. Electric filling station (1) according to any of the preceding claims, **characterized in that** the feed-in unit (2) is designed for a 4-quadrant mode of operation, namely it is designed selectively to feed active power into the ac voltage network (14) or take it therefrom and/or to feed reactive power into the ac voltage network (14) or take it therefrom.

5. Electric filling station (1) according to any of the preceding claims, **characterized by** including an input interface for the input of an active power reference value for predetermining an active power to be fed into or taken from the ac voltage network (14) and/or for the input of an reactive power reference value for predetermining a reactive power to be fed into or taken from the ac voltage network.

6. Electric filling station (1) according to any of the preceding claims, **characterized in that** the at least one accumulator unit (4) is electrically connected to the dc voltage intermediate circuit (6) and wherein optionally the charging apparatus (1) and the at least one accumulator unit (4) is adapted to be insensitive in respect of variations in the intermediate circuit voltage.

7. Electric filling station (1) according to any of the preceding claims, **characterized in that** the at least one accumulator unit (4) comprises
- a buck converter connected to the dc voltage intermediate circuit (6) for controlling a charging current for at least partial charging of the electric storage device (28), or
- a boost converter connected to the dc voltage intermediate circuit (6) for controlling a discharging current for at least partial discharging of the electric storage device (28).

8. Electric filling station (1) according to any of the preceding claims, **characterized in that** the at least one accumulator unit (4) has an accumulator control unit (30) for controlling one or the boost converter and/or for controlling one or the buck converter or for detecting:
- a charging or discharging current,
- an electric charging voltage, in particular of an electric storage device connected to the accumulator unit,
- a charging or discharging power and/or
- a charging condition of an electric storage device connected to the accumulator unit.

9. Electric filling station (1) according to any of the preceding claims, **characterized in that** the feed-in unit (2) is provided for connection to a wind power installation (250) to make an electric connection between the wind power installation (250) and the dc voltage intermediate circuit (6).

10. Electric filling station (1) according to any of the preceding claims, **characterized by** a switching means for selecting a mode of operation
- with wind power installation and with accumulator unit (4),
- without wind power installation and with accumulator unit (4),
- with wind power installation and without accumulator unit (4), and/or
- without wind power installation and without accumulator unit (4).

11. Use of a feed-in unit (2) of a wind power installation (250) as a feed-in unit (2) of a charging apparatus for charging electric storage devices (28) of electric vehicles the feet-in unit (2) comprising
- an electric dc voltage intermediate circuit (6) for the intermediate storage of electric energy with an intermediate circuit voltage, and
- an inverter (8) which is provided for converting a direct current and/or a dc voltage of the dc voltage intermediate circuit (6) into an alternating current, for feeding it into the electric ac voltage network (14) and for converting an alternating current from the ac voltage network (14) into a direct current and/or into a dc voltage for feeding it into the dc voltage intermediate circuit (6), and
for least partial charging of one of the electric storage devices (28) from the dc voltage intermediate circuit (6) and/or for at least partial discharging of one of the electric storage devices (28) into the dc voltage intermediate circuit (6) an or respectively an accumulator unit (4) coupled to the dc voltage intermediate circuit (6) is used and
- a plurality of accumulator units (4) for at least partial charging a respective electric storage devices (28) from the dc voltage intermediate circuit (6) or for at least partial discharging a respective electric storage devices (28) into the dc voltage intermediate circuit (6),
- at least one electric storage device (28) connected to the charging apparatus (1), wherein the electric storage device (28) is provided to be exchanged in the charged condition for an entirely or partially discharged electric storage device (28) of an electric vehicle and
- a network service power control unit (22) for co-ordinating the control of the feed-in unit (2) and the accumulator units (4).

12. Method of controlling a charging apparatus (1) connected to an ac voltage network (14) of an electric filling station according to any of the claims 1 - 10, wherein the charging apparatus (1) is coupled to a wind power installation (250) for producing electric energy from wind energy and in dependence on available wind energy and/or in dependence on presetting information at least one of the electric storage devices (28) is charged with electric energy produced from wind energy.

13. Method according to claim 12, comprising the the steps:
- receiving the presetting information for presetting, feeding active power into the ac voltage network (14) or taking it therefrom and/or feeding reactive power into the ac voltage network (14) or taking it therefrom, and
- controlling the charging apparatus (1) in order in dependence on the presetting information to feed active power into the ac voltage network (14) or take it therefrom and/or to feed reactive power into the ac voltage network (14) or take it therefrom and/or
- controlling the charging apparatus (1) in such a way that in dependence on the presetting information at least one of the electric storage devices (28) is at least partially charged or discharged, and/or wherein a plurality of the electric storage devices (28) are connected to the charging apparatus (1), in particular a respective electric storage device (28) is connected to an accumulator unit (4), wherein each of the electric storage devices (28) is individually charged or discharged.

## Revendications

1. Station de ravitaillement électrique comprenant,
- une éolienne (250) de conversion d'énergie éolienne en énergie électrique comprenant un dispositif de charge (1) de charge d'accumulateurs électriques (28) de véhicules électriques comprenant
- une unité d'injection (2) pour injecter de l'énergie électrique dans un réseau électrique à tension alternative (14) comprenant
- un circuit intermédiaire électrique à tension continue (6) pour stocker temporairement de l'énergie électrique avec une tension de circuit intermédiaire et
- un convertisseur (8), qui est préparé pour convertir un courant continu et/ou une tension continue du circuit intermédiaire à tension continue (6) en un courant alternatif, pour injection dans le réseau électrique à tension alternative (14) et pour convertir un courant alternatif du réseau à tension alternative (14) en un courant continu et/ou en une tension continue pour injection dans le circuit intermédiaire à tension continue (6), et
- plusieurs unités d'accumulateur (4) pour charger au moins en partie chacun des accumulateurs électriques (28) à partir du circuit intermédiaire à tension continue (6) et pour décharger au moins en partie chacun des accumulateurs électriques (28) dans le circuit intermédiaire à tension continue (6) et
- au moins un accumulateur électrique (28) raccordé au dispositif de charge (1), dans laquelle l'accumulateur électrique (28) est prévu pour être remplacé à l'état chargé par un accumulateur électrique (28) déchargé en totalité ou en partie d'un véhicule électrique et
- une unité de commande de service réseau (22) pour coordonner la commande de l'unité d'injection (2) et des unités d'accumulateur (4).

2. Station de ravitaillement électrique (1) selon la revendication 1, **caractérisée en ce que** l'unité d'injection (2) est préparée pour injecter une puissance réactive dans le réseau électrique à tension alternative (14).

3. Station de ravitaillement électrique (1) selon la revendication 1 ou 2, **caractérisée en ce que** l'unité d'injection (2) est préparée pour commander la tension de circuit intermédiaire à une valeur pouvant être prédéfinie.

4. Station de ravitaillement électrique (1) selon l'une quelconque des revendications précédentes, **caractérisée en ce que** l'unité d'injection (2) est conçue pour un fonctionnement à 4 quadrants, à savoir est conçue au choix pour injecter ou prélever de la puissance active dans le réseau à tension alternative (14) et/ou injecter ou prélever de la puissance réactive dans le réseau à tension alternative (14).

5. Station de ravitaillement électrique (1) selon l'une quelconque des revendications précédentes, **caractérisée par** une interface d'entrée pour entrer une valeur de consigne de puissance active pour prédéfinir une puissance active à injecter ou à prélever dans le réseau à tension alternative (14), et/ou pour entrer une valeur de consigne de puissance réactive pour prédéfinir une puissance réactive à injecter ou à prélever dans le réseau à tension alternative.

6. Station de ravitaillement électrique (1) selon l'une quelconque des revendications précédentes, **caractérisée en ce que** l'au moins une unité d'accumulateur (4) est reliée électriquement au circuit intermédiaire à tension continue (14) et dans laquelle, en option, le dispositif de charge (1) et en particulier l'au moins une unité d'accumulateur (4) sont conçus de manière insensible aux variations de la tension de circuit intermédiaire.

7. Station de ravitaillement électrique (1) selon l'une quelconque des revendications précédentes, **caractérisée en ce que** l'au moins une unité d'accumulateur (4),
- présente un convertisseur abaisseur (26) relié au circuit intermédiaire à tension continue (6) pour commander un courant de charge pour charger au moins en partie l'accumulateur électrique (28) et/ou
- présente un convertisseur élévateur (26) relié au circuit intermédiaire à tension continue (6) pour commander un courant de décharge pour décharger au moins en partie l'accumulateur électrique (28).

8. Station de ravitaillement électrique (1) selon l'une quelconque des revendications précédentes, **caractérisée en ce que** l'au moins une unité d'accumulateur (4) présente une unité de commande d'accumulateur (30) pour commander un ou le convertisseur élévateur et/ou pour commander un ou le convertisseur abaisseur et/ou pour détecter :
- un courant de charge ou de décharge,
- une tension de charge électrique, en particulier d'un accumulateur électrique raccordé à l'unité d'accumulateur,
- une puissance de charge ou de décharge et/ou
- un état de charge d'un accumulateur électrique raccordé à l'unité d'accumulateur.

9. Station de ravitaillement électrique (1) selon l'une quelconque des revendications précédentes, **caractérisée en ce que** l'unité d'injection (2) est préparée pour être raccordée à une éolienne (250) afin d'établir une connexion électrique entre l'éolienne (250) et le circuit intermédiaire à tension continue (6).

10. Station de ravitaillement électrique (1) selon l'une quelconque des revendications précédentes, **caractérisée par** un moyen de commutation permettant de sélectionner un fonctionnement
- avec éolienne et avec unité d'accumulateur (4),
- sans éolienne et avec unité d'accumulateur (4),
- avec éolienne et sans unité d'accumulateur (4) et/ou
- sans éolienne et sans unité d'accumulateur (4).

11. Utilisation d'une unité d'injection (2) d'une éolienne (250) en tant qu'unité d'injection (2) d'un dispositif de charge (1) pour charger des accumulateurs électriques (28) de véhicules électriques,
l'unité d'injection (2) comprend
- un circuit intermédiaire électrique à tension continue (6) pour stocker temporairement de l'énergie électrique avec une tension de circuit intermédiaire et
- un convertisseur (8), qui est préparé pour convertir un courant continu et/ou une tension continue du circuit intermédiaire à tension continue (6) en un courant alternatif pour l'injection dans le réseau électrique à tension alternative (14) et pour convertir un courant alternatif du réseau à tension alternative (14) en un courant continu et/ou en une tension continue pour l'injection dans le circuit intermédiaire à tension continue (6), et
pour charger au moins en partie un des accumulateurs électriques (28) à partir du circuit intermédiaire à tension continue (6) et/ou pour décharger au moins en partie un des accumulateurs électriques (28) dans le circuit intermédiaire à tension continue (6), une ou respectivement une unité d'accumulateur (4) couplée au circuit intermédiaire à tension continue (6) étant utilisée et
- plusieurs unités d'accumulateur (4) pour charger au moins en partie chacun des accumulateurs électriques (28) à partir du circuit intermédiaire à tension continue (6) et pour décharger au moins en partie chacun des accumulateurs électriques (28) dans le circuit intermédiaire à tension continue (6) et
- au moins un accumulateur électrique (28) raccordé au dispositif de charge (1), dans laquelle l'accumulateur électrique (28) est prévu pour être remplacé à l'état chargé par un accumulateur électrique (28) déchargé en totalité ou en partie d'un véhicule électrique et
- une unité de commande de service réseau (22) pour coordonner la commande de l'unité d'injection (2) et de l'au moins une unité d'accumulateur (4).

12. Procédé de commande d'un dispositif de charge (1) d'une station de ravitaillement électrique raccordé à un réseau à tension alternative (14) selon l'une quelconque des revendications 1 à 10, dans lequel le dispositif de charge (1) est couplé à une éolienne (250) pour produire de l'énergie électrique à partir de l'énergie éolienne et au moins un des accumulateurs électriques (28) est chargé avec de l'énergie électrique produite à partir de l'énergie éolienne en fonction de l'énergie éolienne disponible et/ou en fonction d'informations de consigne.

13. Procédé selon la revendication 12, comprenant en outre les étapes :
- de réception de l'information de consigne pour prédéfinir la puissance active à injecter ou prélever dans le réseau à tension alternative (14) et/ou la puissance réactive à injecter ou prélever dans le réseau à tension alternative (14), et
- de commande du dispositif de charge (1) pour injecter ou prélever de la puissance active dans le réseau à tension alternative (14) en fonction de l'information de consigne et/ou injecter ou prélever de la puissance réactive dans le réseau à tension alternative (14), et/ou
- de commande du dispositif de charge (1) de telle sorte que, en fonction de l'information de consigne, au moins un des accumulateurs électriques (28) est chargé ou déchargé au moins en partie et/ou dans lequel plusieurs des accumulateurs électriques (28) sont raccordés au dispositif de charge (1), en particulier un accumulateur électrique (28) est respectivement raccordé à une unité d'accumulateur (4), dans lequel chacun des accumulateurs électriques (28) est chargé ou déchargé individuellement.
